# EUROPÄISCHE PATENTANMELDUNG

(11) **EP 4 169 599 A1**
(43) Veröffentlichungstag der Anmeldung: **26.04.2023**
(21) Anmeldenummer: 22202061.2
(22) Anmeldetag: 18.10.2022
(51) Int. Cl.: B01D 29/90, B01D 29/35, B01D 29/54

(54) **FILTERVORRICHTUNG**

(30) Priorität: 23.10.2021 DE 102021005289
(71) Anmelder: RT-Filtertechnik GmbH, 88048 Friedrichshafen (DE)
(72) Erfinder: Stehle, Gerhard, 78467 Konstanz (DE); van Uffelen, Florentin, 88085 Langenargen (DE)
(74) Vertreter: Bartels und Partner, Patentanwälte

(57) **Zusammenfassung**

2. Filtervorrichtung mit einem in einem Vorratstank (30) tauschbar aufgenommenen Filterelement, das ein Elementmaterial (10) aufweist, das eine Filtratseite (12) von einer Unfiltratseite (14) trennt, wobei das Filterelement zumindest an einer Zuströmseite (32) für einen Unfiltratstrom mit einer Endkappe (34) versehen ist und mit einer Fluidführungseinrichtung (36), die über einzelne Stege voneinander getrennte Fluiddurchlässe aufweist, dadurch gekennzeichnet, dass die Fluidführungseinrichtung (36) an zentraler Stelle innerhalb der Endkappe (34) angeordnet im Betrieb eine Fluidverbindung zwischen der Zuströmseite (32) und der Unfiltratseite (14) herstellt.

## Beschreibung

Die Erfindung betrifft eine Filtervorrichtung mit einem in einem Vorratstank tauschbar aufgenommenen Filterelement, das ein Elementmaterial aufweist, das eine Filtratseite von einer Unfiltratseite trennt, wobei das Filterelement zumindest an einer Zuströmseite für einen Unfiltratstrom mit einer Endkappe versehen ist und mit einer Fluidführungseinrichtung, die über einzelne Stege voneinander getrennte Fluiddurchlässe aufweist.

Durch DE 10 2008 012 521 A1 ist eine Filtervorrichtung nebst zugehörigem Filterelement bekannt, die als sogenannte In-Tank-Lösung zum Einbau in einen Fluidvorratstank vorgesehen sind, wobei das Filterelement ausgehend von einer inneren Unfiltratseite nach außen in Richtung einer Filtratseite von einem regelmäßig mit Partikelverschmutzung versehenen Fluid durchströmbar ist. Bei der bekannten Lösung ist das Filterelement in Richtung seiner Filtratseite unter Beibehalten eines vorgebbaren Radialabstandes und unter Bildung eines Fluidströmungsraumes von einer Wand eines Abströmrohres umgeben, das mehrere Durchlassstellen aufweist, von denen ein Teil unterhalb des jeweiligen veränderbaren Fluidniveaus im Vorratstank und der andere Teil oberhalb dieses Fluidniveaus angeordnet ist. Dank dieser Anordnung strömt das in den Fluidströmungsraum eintretende, vom jeweiligen Filterelement von Partikelverschmutzung abgereinigte Fluid im Bereich des jeweiligen Fluidniveaus und oberhalb desselben in laminarer Weise über die zuordenbaren Durchlassstellen in den Vorratstank, so dass dergestalt unerwünschte Spritz- oder Schaumbildung beim austretenden Fluid derart mit Sicherheit vermieden ist. Der abzureinigende Unfiltratstrom tritt bei der bekannten Lösung von oben her an der Zuströmseite über eine freie Durchgangsöffnung in der oberen Endkappe, die in diesem Bereich von einer Permanentmagneteinrichtung durchgriffen ist in die Innen- oder Unfiltratseite des Filterelementes ein, was zu einer ungleichmäßigen Anströmung der Filterfalten des Filtermaterials für das Filterelement führt, was im schlimmsten Fall mit einer Beschädigung der Filterfalten einhergehen kann.

Durch DE 10 2007 046 209 A1 ist eine Filtervorrichtung mit einem gattungsgemäßen Filterelement bekannt, das einen sich entlang einer Längsachse erstreckenden Körper bildet und in einem Gehäuse aufnehmbar ist, das mittels eines Deckelteiles verschlossen ist, wobei eine Dichtungsanordnung zur Bildung einer fluiddichten Abdichtung zwischen dem Gehäuse und dem Deckelteil vorgesehen ist. Die Dichtungsanordnung ist als Bestandteil des von außen nach innen durchströmten Filterelementes an einem mit diesem fest verbundenen Dichtungsträger festgelegt, der durch einen bezogen auf die Längsachse radial vom zentralen Teil der Endkappe abgesetzten Umfangsteil derjenigen Endkappe gebildet ist, die an den dem Deckelteil zugeordneten Ende des Filterelementes eine Einfassung für dessen Filtermedium auf dessen Zuströmseite bildet.

Der den Dichtungsträger bildende Umfangsteil ist über radial verlaufende Stege mit dem zentralen Teil der Endkappe verbunden, wobei die Zwischenräume zwischen den Stegen im Betriebszustand der Vorrichtung voneinander getrennte Fluiddurchlässe zwischen einer Fluidführung im Deckelteil und der Außenseite des Filterelementes bilden. Dadurch, dass bei der bekannten Lösung der Dichtungsträger mit dem Zentralbereich der betreffenden Endkappe lediglich über radiale Stege in Verbindung ist, verbleibt ein verhältnismäßig unbehinderter Strömungsweg für den Fluideintritt des Unfiltratstroms vonseiten des Deckelteils aus in den Innenraum des Gehäuses, so dass die Anströmung des Filterelementes von außen her über die Unfiltratseite erfolgt. Aufgrund verschiedener Anströmrichtungen "außen nach innen" anstelle von "innen nach außen" für den Unfiltratstrom ist die dahingehende Ausgestaltung für die eingangs beschriebene In-Tank-Lösung nicht einsetzbar.

Ausgehend von diesem Stand der Technik liegt der Erfindung die Aufgabe zugrunde, eine Filtervorrichtung zu schaffen, die eine verbesserte Fluid-Strömungsführung für Filterelemente erlaubt, die insbesondere in In-Tank-Lösungen Verwendung finden. Eine dahingehende Aufgabe löst eine Filtervorrichtung mit den Merkmalen des Patentanspruches 1.

Dadurch, dass gemäß dem kennzeichnenden Teil des Patentanspruches 1 die Fluidführungseinrichtung an zentraler Stelle innerhalb der Endkappe angeordnet im Betrieb eine Fluidverbindung zwischen der Zuströmseite und der Unfiltratseite herstellt, ist im Bereich einer oberen oder unteren Einlassendkappe am Filterelement die Vorrichtung mit zusätzlichen Strömungsführungen ausgestattet, so dass eine gleichmäßige Anströmung des Elementmaterials, regelmäßig in Form sogenannter Meshpacks, garantiert und eine Beschädigung der einzelnen Filterfalten insoweit ausgeschlossen ist. Dergestalt ist ein vergleichmäßigter Schmutzeintrag in das Elementmaterial erreicht, was zu einer verbesserten Abreinigung des Unfiltrat-Fluidstroms von partikulären Verunreinigungen führt. Auch sind durch die vergleichmäßigte Strömung beim Durchtritt des Elementmaterials des Filterelementes von innen nach außen respektive von der Unfiltrat- auf die Filtratseite Strömungsverluste, beispielsweise hervorgerufen durch Turbulenz, vermieden, so dass sich insgesamt ein energetisch günstiger Betrieb für das Filterelement ergibt.

Bei einer bevorzugten Ausführungsform der erfindungsgemäßen Filtervorrichtung ist vorgesehen, dass die Fluidführungseinrichtung strahlenartig von ihrer Mitte ausgehend in der Art eines Kranzes die einzelnen Stege aufweist, die endseitig derart in Ringwandungen übergehen, dass schachtartige Fluiddurchlässe gebildet sind. Die durch die einzelnen Stege gebildeten Schachtwände sind parallel zur Längsachse des Filterelementes ausgerichtet; es besteht aber auch die Möglichkeit, durch Schrägstellen der Steg- oder Schachtwände eine Art Drallführung für den abzureinigenden Fluidstrom zu erreichen, so dass es in Längsausrichtung des Filterelementes gesehen von oben nach unten zu einer vergleichmäßigten Anströmung der einzelnen Filterfalten des Elementmaterials kommt. Dabei ist die Fluidführungseinrichtung im Betrieb vorzugsweise stationär im Filterelement bleibend angeordnet.

Bei einer weiteren bevorzugten Ausführungsform der erfindungsgemäßen Filtervorrichtung ist vorgesehen, dass mindestens zwei Kränze in Reihe hintereinander angeordnet sind, die eine unterschiedliche Anzahl von Stegen und von unterschiedlich großen Fluiddurchlässen aufweisen. Vorzugsweise ist dabei ferner vorgesehen, dass die Summe der freien Querschnittsflächen aller Fluiddurchlässe des äußeren Kranzes gleich oder im Wesentlichen gleich sind mit den freien Querschnittsflächen aller Fluiddurchlässe des jeweils in der Reihe nachfolgenden inneren Kranzes. Bevorzugt ist dabei der jeweilige Kranz koaxial zur Längsachse des Filterelementes angeordnet. Über die Unterteilung der Fluidführungseinrichtung in mehrere, insbesondere zwei Kränze, lässt sich der in das Innere des Filterelementes einzubringende Unfiltratstrom in Teilströme aufteilen, was die Fluidströmung vergleichmäßigt und ausrichtet, so dass der Fluidstrom mit geringerer kinetischer Energie auf die Innenseite der Filterfalten trifft, was das empfindliche Filterfaltenmaterial vor Beschädigungen schützt und insbesondere behalten diese dergestalt ihre Position bei und werden nicht strömungsbedingt im Sinne eines Verblockens des Elementmaterials zusammengeklappt, was ansonsten den freien Strömungsraum verringern würde.

Bei einer weiteren bevorzugten Ausführungsform der erfindungsgemäßen Filtervorrichtung ist vorgesehen, dass die Fluidführungseinrichtung koaxial zur Längsachse des Filterelementes angeordnet eine
- zusätzliche Fluidführung und/oder
- Halteeinrichtung für eine Magneteinrichtung, wie einen Permanentmagneten, aufweist, die zumindest teilweise auf der Unfiltratseite des Elementmaterials geführt ist.

Die zusätzliche Fluidführung kann unter Bildung einer Art Drallkörper zur Unfiltratseite des Filterelementes hin spindelförmig ausgebildet und kann als Einsatzteil separat mittig zwischen die einzelnen Kränze der Fluidführungseinrichtung eingesetzt sein. Es besteht aber auch die Möglichkeit, diese zusätzliche Fluidführung als einstückiger Bestandteil der Fluidführungseinrichtung auszubilden.

Vorzugsweise bildet die dahingehend zusätzliche Fluidführung eine Halteeinrichtung für eine Magneteinrichtung aus, beispielsweise in Form eines stabförmigen Permanentmagneten, der bevorzugt zusammen mit der zusätzlichen Fluidführung aus dem Filterelement herausnehmbar ist, wobei im Betrieb die Magneteinrichtung auf der Unfiltratseite des Filterelementes wirkt und magnetisierbare Partikelverschmutzungen, wie sie beispielsweise von metallischen Spänen her rühren können, sich insoweit an der Mag neteinrichtung ablagern.

Bei einer weiteren bevorzugten Ausführungsform der erfindungsgemäßen Filtervorrichtung ist vorgesehen, dass die die Fluiddurchlässe begrenzenden Stege und bevorzugt auch die die Stege radial begrenzenden Ringwandungen an ihrer der Zuströmseite abgekehrten Seite unter Bildung einer Krone mit vorspringenden Zacken versehen sind. Dank der Kronengeometrie mit ihren vorspringenden Zacken, die in das Innere des Filterelementes teilweise hineinragen, ist eine weitere Führungseinrichtung geschaffen, die die Anströmsituation in Bezug auf die Filterfalten verbessert.

Bei einer weiteren bevorzugten Ausführungsform der erfindungsgemäßen Filtervorrichtung ist vorgesehen, dass die Endkappe auf der Zuströmseite eine Abdichteinrichtung aufweist, die mit einem ringförmigen Dichtungsträger versehen ist und die mit einer wirksamen Dichtfläche über eine Aufnahme in der Endkappe für das Elementmaterial vorsteht. Aufgrund der Abdichteinrichtung an der Endkappe des Filterelementes ist in dessen Einbausituation in einem zugeordneten Filtergehäuse eine sichere Abdichtung zwischen Unfiltrat- und Filtratseite erreicht und das Filterelement lässt sich für einen Austauschvorgang gegen ein Neuelement aus dem Vorrichtungsgehäuse in einfacher Weise mit geringen Hand-Betätigungskräften entnehmen. Auch lässt sich dergestalt im Bedarfsfall ein Tausch des ringförmigen Dichtelementes vornehmen, das in einer nutförmigen Vertiefung im Dichtungsträger eingesetzt ist.

Für eine besonders günstige Strömungsführung des Unfiltratstroms hat es sich als vorteilhaft erwiesen, wenn sowohl die Stege als auch die zugehörigen Fluiddurchlässe auf gegenüberliegenden Seiten der zugeordneten Endkappe um einen vorgebbaren Betrag axial vor- oder überstehen. Es gibt aber auch Lösungen, wo der Überstand nur auf einer Seite vorgesehen ist.

Bei einer bevorzugten Ausführungsform der erfindungsgemäßen Filtervorrichtung ist vorgesehen, dass die Fluidführungseinrichtung integraler Bestandteil der Endkappe ist, die am oberen und/oder unteren Ende am Filterelement als der tauschbaren Baueinheit im Vorratstank angeordnet ist. Hierdurch erhöhen sich die Einsatzmöglichkeiten für die Filtervorrichtung, die je nach Einbausituation des Filterelements im Vorratstank eine Anströmung im Betrieb über die Zuströmseite von oben oder von unten her ermöglicht, so dass mit nur einem Vorrichtungskonzept sich eine Vielzahl von Anwendungsfällen abdecken lassen.

Bei einer weiteren bevorzugten Ausführungsform der erfindungsgemäßen Filtervorrichtung ist vorgesehen, dass die Fluidführungseinrichtung mit dem in Betrieb zuoberst liegenden Deckelteil zusammen aus dem Vorratstank entfernbar und umgekehrt in die Endkappe des im Vorratstank verbleibenden Filterelements an zentraler Stelle wieder einsetzbar ist. Insbesondere, wenn im Anschluss an die Fluidführungseinrichtung die Magneteinrichtung folgt, regelmäßig in Form eines stabförmig ausgebildeten Permanentmagneten, kann über das genannte Deckelteil die Fluidführungseinrichtung und der Permanentmagnet zusammen aus dem Vorratstank mit dem Filterelement entnommen werden, um beispielsweise am Permanentmagneten abgelagerte magnetisierbare Partikel abreinigen zu können, und nach dem Abreinigungsvorgang lässt sich der angesprochene Verbund wieder in den Vorratstank mit dem dort verbleibenden Filterelement einsetzen. Dies erleichtert deutlich die Handhabung; insbesondere muss das eventuell noch nicht verbrauchte Filterelement nicht in unnötiger Weise zusätzlich aus dem Vorratstank entnommen werden. Bevorzugt kann dabei die Fluidführungseinrichtung als Einzelbauteil auch lose auf die Elementkappe aufgesetzt werden, da die Fluidführungseinrichtung dann über das obere Deckelteil auf Position gehalten werden kann.

Bei einer weiteren bevorzugten Ausführungsform der erfindungsgemäßen Filtervorrichtung ist vorgesehen, dass zumindest Teile der Fluidführungseinrichtung in der Betriebsstellung gegenüber der Horizontalen eine Neigung aufweisen. Hiermit kann auch bei einer direkten seitlichen Anströmung eine gleichmäßige Umlenkung des Volumenstroms in das Filterelement erzielt werden, indem die zunächst horizontal verlaufende Strömung in eine vertikale Eintrittsströmung vor Durchqueren der Fluiddurchlässe der Fluidführungseinrichtung umgelenkt ist.

Des Weiteren ist ein Filterelement beansprucht für eine Vorrichtung wie vorstehend angegeben, wobei das Filterelement tauschbar in einem Abströmrohr aufgenommen ist, das Bestandteil einer Festlegeeinrichtung mit zwei zueinander beabstandeten Deckelteilen ist, die zwischen sich eine Prallplatte mit Durchgängen aufspannen, die in Fluidverbindung mit der Zuströmseite des Filterelementes stehen. Von ihrem grundsätzlichen Aufbau her entspricht die dahingehende Filtervorrichtungslösung dem Gegenstand nach der DE 10 2008 012 521 A1, wobei über die mit Fluiddurchgängen versehene Prallplatte sich etwaig hohe Fluidgeschwindigkeiten des zu filtrierenden Fluids verringern lassen, was einen Filterfalten schonenden Betrieb der Gesamtvorrichtung ermöglicht. Dabei ist bevorzugt die Fluidführungseinrichtung integraler Bestandteil der oberen und unteren Endkappe.

Im Folgenden wird die erfindungsgemäße Lösung anhand von Ausführungsbeispielen nach der Zeichnung näher erläutert. Dabei zeigen in prinzipieller und nicht maßstäblicher Darstellung die
- Fig. 1: einen Längsschnitt durch einen Fluid-Vorratstank mit eingesetzter Filtervorrichtung nebst tauschbarem Filterelement;
- Fig. 2: im Längsschnitt und in perspektivischer Ansicht kopfseitige Komponenten der Gesamtanordnung nach der Fig. 1;
- Fig. 3 und 4: eine Draufsicht bzw. eine Unteransicht auf eine Fluidführungseinrichtung für ein Filterelement gemäß den Darstellungen nach den Fig. 1 und 2;
- Fig. 5: in perspektivischer Schrägansicht von oben her eine zusätzliche Fluidführungskomponente der Fluidführungseinrichtung nach den Fig. 1 bis 4.
- Fig. 6: in der Art einer Explosionszeichnung, das obere Deckelteil der Vorrichtung über das die Fluidführungseinrichtung mit einer Magneteinrichtung aus einer Endkappe eines Filterelementes wie dargestellt entfernbar und an zentraler Stelle wieder einsetzbar ist, wobei von dem Filterelement der einfacheren Darstellung wegen nur die obere Endkappe gezeigt ist;
- Fig. 7: eine Detaillösung für die Fluidführungseinrichtung, die lose entlang eines Innenumfanges auf die obere Endkappe aufsetzbar ist;
- Fig. 8: in ausschnittsweiser prinzipieller Darstellung eine Elementlösung mit einer gegenüber der Horizontalen geneigten Eintrittsebene für die Fluidführungseinrichtung; und
- Fig. 9: eine weitere Ausführungsform für eine in einen Vorratstank eingesetzte Filtervorrichtung, bei der die Zuströmseite für das Unfiltrat auf der Unterseite des Fluid-Vorratstankes liegt und mit einer Fluidführungseinrichtung als integralem Bestandteil, nunmehr der unteren Endkappe des Filterelementes.

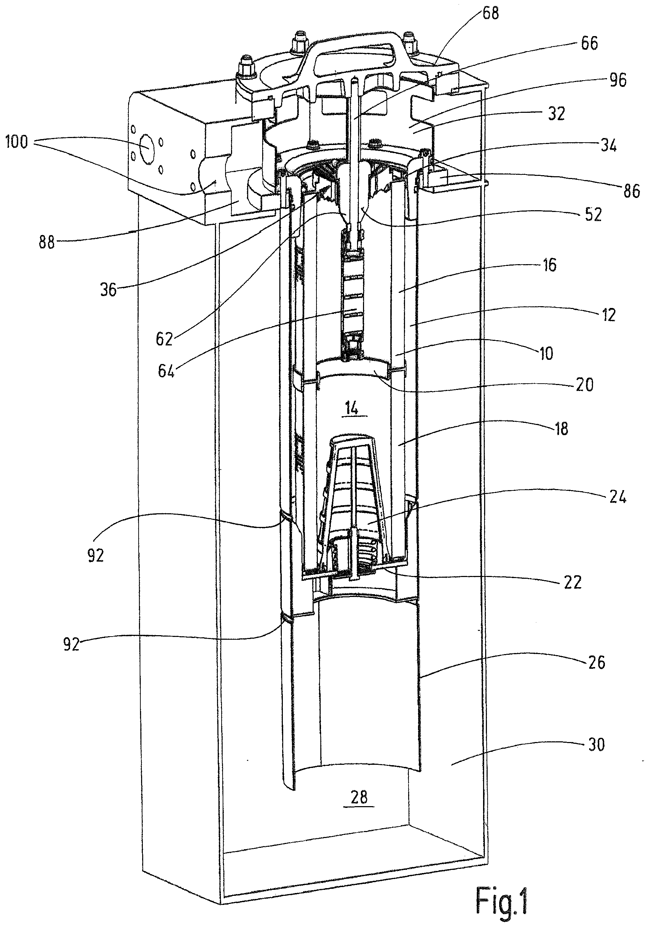

Das in Fig. 1 als Ganzes gezeigte Filterelement weist ein Elementmaterial 10 auf, das eine außenliegende Filtratseite 12 von einer innenliegenden Unfiltratseite 14 trennt, wobei ein abzureinigender Fluidstrom, beispielsweise gebildet aus Hydrauliköl, das Elementmaterial 10 von der Unfiltratseite 14 auf die Filtratseite 12 passieren kann. Das Elementmaterial 10 des Filterelementes kann mehrteilig oder mehrstufig aufgebaut sein. Insbesondere ist das Elementmaterial 10 gemäß der Darstellung nach der Fig. 1 in zwei Filterbereiche 16, 18 unterteilt, die über eine mittlere Endkappe 20 in koaxialer Hintereinanderanordnung voneinander separiert sind. In der in Fig. 1 gezeigten Betriebsstellung ist das Filterelement an seinem unteren Ende mit einer unteren Endkappe 22 verschlossen, die an ihrer Oberseite eine By-passeinrichtung 24 trägt, die in üblicher Weise bei verblocktem Filterelement die Unfiltratseite 14 zur Umgebung hin öffnet, sprich im vorliegenden Fall über das Innere eines Abströmrohres 26 in das Tankinnere 28 eines Vorratstanks 30 führt, der in der Fig. 1 nur exemplarisch wiedergegeben ist und natürlich eine andere Größe und Form besitzen kann. Auf der Zuströmseite 32 für einen Unfiltratstrom des Filterelementes ist dieses mit einer oberen Endkappe 34 versehen, die den oberen Filterbereich 16 des Elementmaterials 10 nach oben hin gesehen bündig abschließt.

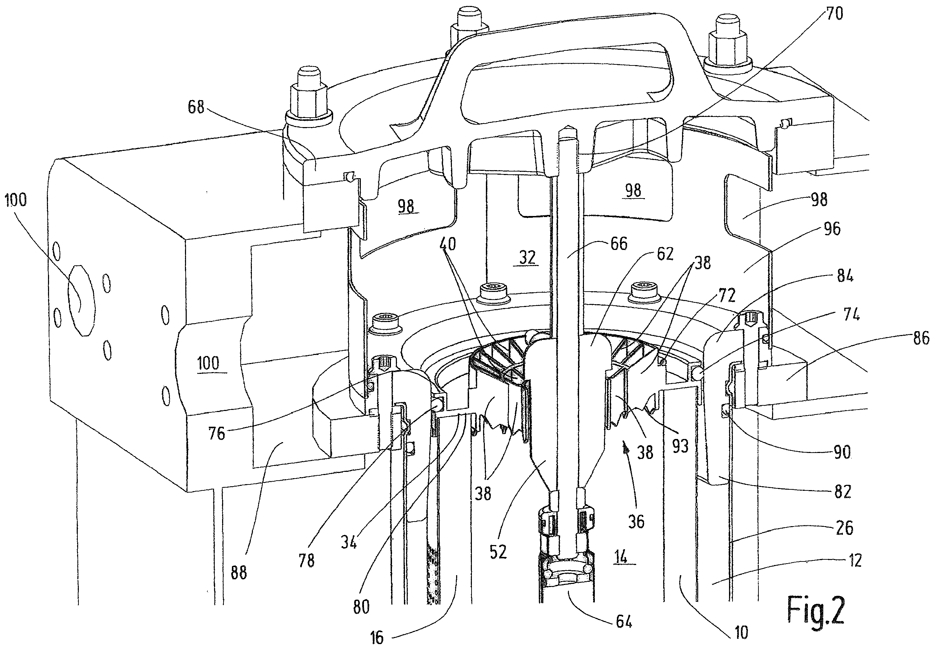

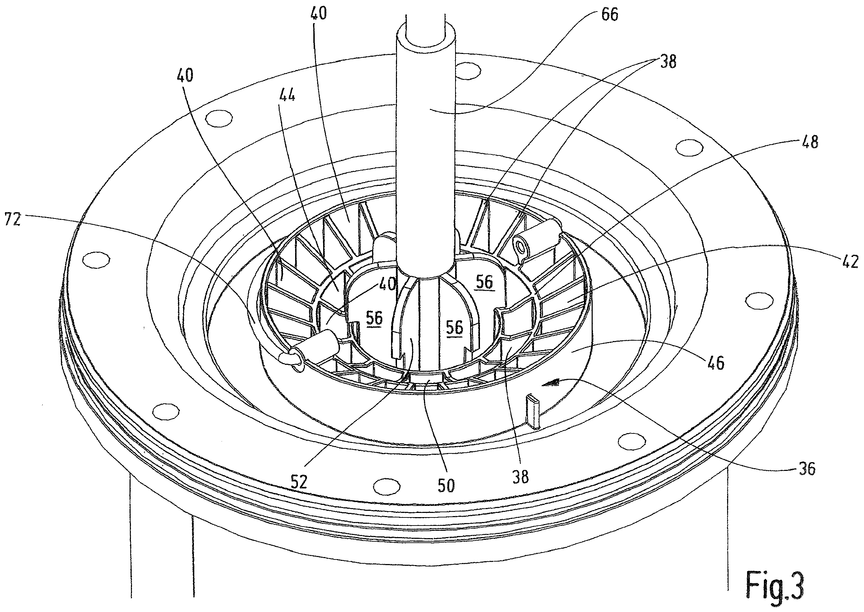

Wie insbesondere die Fig. 2 bis 4 zeigen, weist die obere Endkappe 34 eine als Ganzes mit 36 bezeichnete Fluidführungseinrichtung auf, die über einzelne Stege 38 voneinander getrennte schachtartige Fluiddurchlässe 40 aufweist. Die dahingehenden Stege 38 nebst den Fluiddurchlässen 40 erstrecken sich in diskreten Abständen voneinander, um eine Längsachse des ansonsten im Wesentlichen zylindrisch ausgebildeten Filterelementes herum. Insbesondere weist die Fluidführungseinrichtung 36 strahlenartig von ihrer Mitte mit der genannten Längsachse ausgehend in der Art eines Kranzes 42, 44 die einzelnen Stege 38 auf, die endseitig derart einstückig in Ringwandungen 46, 48, 50 (siehe Fig. 3) übergehen, dass die einzelnen schachtartigen Fluiddurchlässe 40 gebildet sind. Ebenso wie die Stege 38 sind die Ringwandungen 46, 48, 50 aus geschlossenen Führungsflächen für das zu führende Strömungsfluid gebildet. Insoweit ist eine Fluidverbindung zwischen der Zuströmseite 32 und der Unfiltratseite 14 auf der Innenseite des Elementmaterials 10 über die Fluidführungseinrichtung 36 als Ganzes geschaffen. Wie des Weiteren die Fig. 1 bis 4 zeigen, sind im vorliegenden Fall zwei Kränze 42, 44 in Reihe hintereinander angeordnet, die eine unterschiedliche Anzahl von Stegen 38 und von unterschiedlich großen Fluiddurchlässen 40 aufweisen. Insbesondere umfasst der äußere Kranz 42 den innen verlaufenden Kranz 44, wobei die äußere Ringwandung 46 zusammen mit der mittleren Ringwandung 48 die einzelnen Stege 38 nach außen und nach innen hin begrenzen und die Stege 38 des zweiten Kranzes 44 sind nach außen hin benachbart zu dem ersten Kranz 42 von der mittleren Ringwandung 48 sowie von der inneren Ringwandung 50 durchgängig begrenzt.

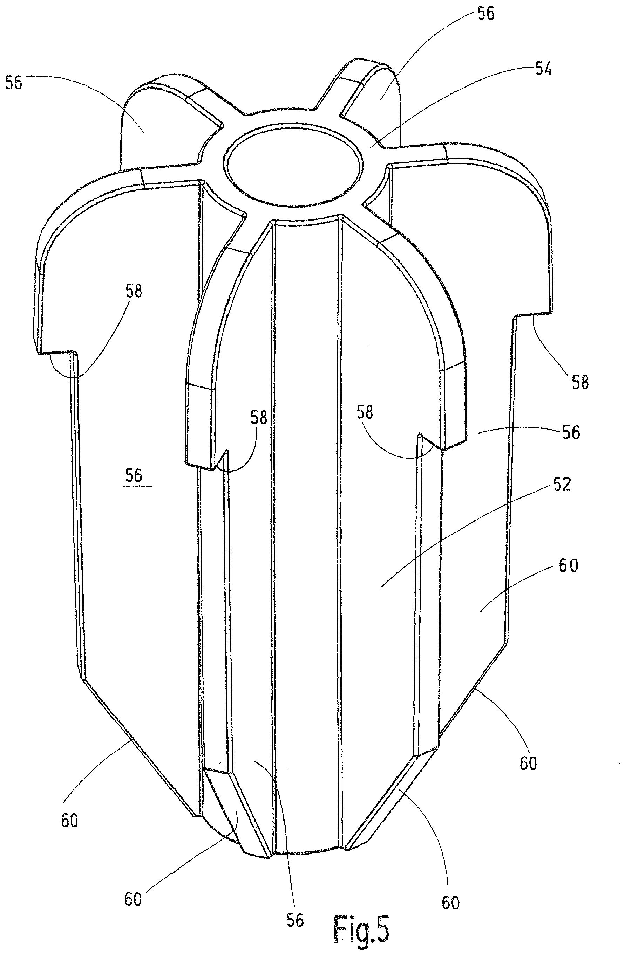

Für eine besonders vorteilhafte Strömungsführung hat es sich als günstig erwiesen, dass die Summe der freien Querschnittsflächen aller Fluiddurchlässe 40 des äußeren Kranzes 42 gleich oder im Wesentlichen gleich sind mit den freien Querschnittsflächen aller Fluiddurchlässe 40 des jeweils in der Reihe nachfolgenden inneren Kranzes 44. In jedem Fall ist dabei der jeweilige Kranz 42, 44 koaxial zur Längsachse des Filterelementes angeordnet. Wie insbesondere die Fig. 3 zeigt, durchgreifen dabei die Stege 38 des inneren Kranzes 44 ausgehend von der Mitte mit der Längsachse in fiktiver Verlängerung nach Passieren der mittleren Ringwandung 48 die Fluiddurchlässe 40 des sich anschließenden Kranzes 42 zwischen zwei jeweils benachbarten Stegen 38 des dahingehend ersten Kranzes 42. Dergestalt ist die mittlere Ringwandung 48 über die angrenzenden Stege 38 sowohl nach innen als auch nach außen hin entsprechend ausgesteift. Des Weiteren weist die Fluidführungseinrichtung 36 koaxial zur Längsachse des Filterelementes eine zusätzliche Fluidführung 52 auf, die in der Art eines Spindelkörpers gemäß der Darstellung nach der Fig. 5 ausgebildet ist, der ausgehend von einem mittigen Rohr 54 nach außen vorstehender einzelne Führungsrippen 56 aufweist, die insoweit vergleichbar zu den Stegen 38 Führungsflächen für die Fluidführung eines Unfiltratstromes ausbilden. Die zusätzliche Fluidführung kann zur Anpassung der Strömungsführung auch aus einem Drallkörper gebildet sein. In Blickrichtung auf die Fig. 5 nach oben hin gesehen, weisen die dahingehenden Führungsrippen 56 stufenartige Absätze 58 auf, die dazu dienen, gemäß der Darstellung nach den Fig. 1 bis 3, den Fluidführungskörper 52 auf die Oberseite der Fluidführungseinrichtung 36 aufzusetzen; im vorliegenden Fall auf die innere Ringwandung 50 des innenliegenden Kranzes 44. Insoweit wird die Fluidführung 52 in eine kreisförmige Ausnehmung der Fluidführungseinrichtung 36 eingesetzt, die von der inneren Ringwandung 50 umfasst ist. Insoweit begrenzen die diametral zu der Längsachse gegenüberliegenden Führungsrippen 56 einander benachbart zwischen sich einzelne Fluidströmungsräume, die die Zuströmseite 32 des Filterelementes mit seiner Unfiltratseite 14 fluidführend verbinden. In Blickrichtung auf die Fig. 5 gesehen, münden diese Führungsrippen 56 auf ihrer Unterseite in Schrägen 60 aus, die insoweit eine laminar gerichtete, ungestörte Fluidführung entlang der Fluidführung 52 in Richtung des Unfiltratraumes 14 begünstigen.

Wie sich des Weiteren aus den Fig. 1 und 2 ergibt, bildet die dahingehende zusätzliche Fluidführung 52 gleichzeitig eine Halteeinrichtung 62 für eine Magneteinrichtung 64 aus. Die dahingehende Magneteinrichtung 64 ist aus einem Permanentmagneten mit einzelnen Magnetscheiben gebildet; eine Ausgestaltung, die auf dem genannten Filtrationsgebiet üblich ist. Die Magneteinrichtung 64 mündet in Blickrichtung auf die Fig. 1 gesehen mit ihrem unteren Ende oberhalb der mittleren Endkappe 20 im Unfiltratraum 14 aus und am oberen Ende ist die Magneteinrichtung 64 über eine Haltestange 66 an einem oberen Deckelteil 68 gelagert, insbesondere ist das freie Ende des Haltestabes 66 über eine Schraubverbindung 70 mit dem oberen Deckelteil 68 verbunden. Des Weiteren durchgreift die Haltestange 66, die von einer Distanzhülse umfasst sein kann, den Zuströmraum 32 sowie eine hohlzylindrische Ausnehmung im Rohr 54 der zusätzlichen Fluidführung 52. Das obere Deckelteil 68 ist über eine Flanschverbindung mit der Oberseite des Vorratstanks 30 lösbar verbunden, und nach Freigabe der Flanschverbindung kann das obere Deckelteil 68 vom Vorratstank 30 abgenommen werden, wodurch die Magneteinrichtung 64 über die Haltestange 66 zusammen mit der Halteeinrichtung 62 respektive der Fluidführung 52 aus dem Filterelement entnehmbar ist. Etwaig an der Magneteinrichtung 64 anhaftende Metallpartikel lassen sich dann von der Magneteinrichtung 64 zwanglos abstreifen und anschließend lässt sich die genannte Anordnung in umgekehrter Reihenfolge wieder im Filterelement für weitere Filtrationsvorgänge festlegen. Mit Abnahme des oberen Deckelteils 68 ist darüber hinaus eine Zugangsöffnung freigegeben und das Filterelement lässt sich über eine bügelartige Handhabe 72, wie insbesondere aus der Fig. 3 zu entnehmen ist, die entsprechend hochgestellt wird, entnehmen. Eine solche Entnahme ist zwingend notwendig, sofern das Elementmaterial 10 von Partikelverschmutzung zugesetzt das Filterelement verblockt und insoweit dieses Filterelement gegen ein unverbrauchtes Neuelement zu tauschen ist. Das Elementmaterial 10 umfasst dabei bis auf eine etwaig vorhandene Längsverbindungsnaht die Unfiltratseite 14 respektive den Unfiltratraum des Filterelementes mit seinem Innenumfang vollständig.

Wie sich insbesondere aus der Schnittdarstellung nach der Fig. 2 ergibt, weist die obere Endkappe 34 in Richtung der Zuströmseite 32 wirkend eine Abdichteinrichtung 74 auf, die mit einem ringförmigen Dichtungsträger 76 versehen ist mit konzentrischer Anordnung zur Längsachse des Elementes. In dem nach außen hin nutförmig offenen Dichtungsträger 76 ist ein ringförmiger Dichtring oder O-Dichtring 78 eingelegt, der mit seiner wirksamen Dichtfläche über eine Aufnahme 80 in der Endkappe 34 für das Elementmaterial 10 vorsteht. Entnimmt man das Filterelement nach freigegebener Entnahmeöffnung mittels der Handhabe 72 gleitet der Dichtring 78 auf der Innenseite an einem ringförmigen Haltekörper 82 ab, der mit einem abgekröpften Rand 84 mittels einer Schraubverbindung permanent mit einem weiteren Deckelteil 86 fest verbunden ist, das als umlaufender Rand sich auf der Oberseite einer weiteren Tankwand 88 des Vorratstanks 30 abstützt und insoweit an dieser festgelegt ist. Im Bereich des oberen Randes 84 ist zwischen Seitenwandteilen des Haltekörpers 82 und dem ringförmigen Deckelteil 86 am oberen freien Ende das Abströmrohr 26 festgelegt und in diesem Bereich über einen weiteren O-Dichtring 90 abgedichtet. Gemäß der Darstellung nach der Fig. 1 kann das Abströmrohr 26 als hohlzylindrischer Mantelkörper ausgebildet sein, der zur Aussteifung seiner geschlossenen Mantelfläche mit umlaufenden Bördelsicken 92 versehen ist. Für eine verbesserte Abscheidung von etwaig im Fluid vorhandenen Luftblasen kann, was nicht näher dargestellt ist, das insoweit geschlossene Abströmrohr 26 mit Fluiddurchlassstellen versehen sein. Im vorliegenden Ausführungsbeispiel gemäß der Darstellung nach der Fig. 1 endet jedenfalls das Abströmrohr 26 mit einem axialen Überstand über das Filterelement vorstehend nach unten in das Tankinnere 28 aus, zwecks Abfuhr eines Filtratstromes in den Vorratstank 30. Der zwischen Filterelement und der Innenseite des Abströmrohres 26 geführte Filtratstrom wird insoweit von seinem Strömungsverlauf hin laminar geführt, so dass es nicht ungewollt im Vorratstank 30 auf der Tankinnenseite zu Blasenbildungen oder zum Aufspritzen des Tankinhalts kommen kann. Bei Entnahme des Elementes über die obere Abgabeöffnung verbleibt jedenfalls der Haltekörper 82 mit dem Abströmrohr 26 im Fluidvorratstank 30.

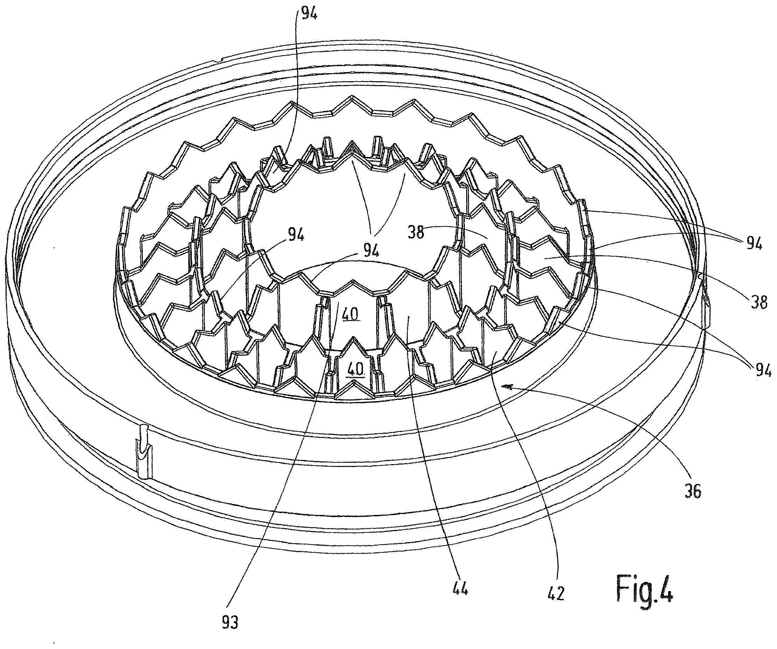

Für eine günstige Fluidführung ist ferner vorgesehen, dass sowohl die Stege 38 als auch die zugehörigen Fluiddurchlässe 40 auf gegenüberliegenden Seiten der oberen Endkappe 34 axial vorstehen können, so dass bereits auf der Zuströmseite 32 mit dem Unfiltratstrom eine Vergleichmäßigung für diesen Unfiltratstrom erreicht ist. Zur weiteren Vergleichmäßigung des Fluidstromes ist vorgesehen, dass gemäß der Darstellung nach der Fig. 4 auf der Unterseite der beiden Kränze 42, 44 unter Bildung einer Art Krone 93, einzelne Zacken 94 in Richtung der Unfiltratseite 14 des Filterelementes vorstehen können. Die dahingehenden dreieckförmigen Zacken 94 verlängern die Wandflächen der Stege 38 sowie der Fluiddurchlässe 40, was einen zusätzlichen laminaren Fluidströmungseffekt ergeben kann. Die genannten Zacken 94 stehen dabei nach unten über eine fiktive Begrenzungsfläche vor, die in horizontaler Ausrichtung von der Unterseite der Ringwandungen 46, 48 und 50 aufgespannt ist.

Als weitere Strömungsführung ist bei einer Filtervorrichtung mit dem Filterelement und dem Vorratstank 30 als der eigentlichen Festlegeeinrichtung für das Filterelement mit den beiden zueinander beabstandeten Deckelteilen 68 und 86 eine konzentrisch zur Längsachse des Filterelementes umlaufende Prallplatte 96 vorhanden, mit fensterartigen Durchgängen 98, so dass das über den Eingang 100 in den Vorratstank 30 kopfseitig zuströmende Unfiltrat gleichmäßig über den Außenumfang der Prallplatte 96 verteilt, bei Durchtritt der Durchgänge 98 im Strömungsverlauf homogenisiert wird, bevor nach Verlassen des sich anschließenden Zuströmraumes 32 die weitere Vergleichmäßigung des Unfiltratstroms über die beschriebene Fluidführungseinrichtung 36 erfolgt. Diese bildet insoweit, wie sich insbesondere aus den Fig. 1 und 2 ergibt, auch einen Niederhalter für das Filterelement als Ganzes aus, der über die Schraubverbindung 70 und die Haltestange 66 mittels des oberen Deckelteils 68 bei dessen Aufsetzen auf die Oberseite des Vorratstanks 30 eine Kraftübertragung mittels der zusätzlichen Fluidführung 52 respektive der Halteeinrichtung 62 erlaubt.

Insgesamt ist mit der erfindungsgemäßen Fluidführungseinrichtung 36 als Ganzes erreicht, dass eine im Zuströmraum 32 zwangsläufig vorhandene Drallströmung des abzureinigenden Fluids nach Durchtritt der Einrichtung 36 derart laminar und parallel zu den Filterfalten des Elementmateriales 10 ausgerichtet ist, dass die Filterfalten bei optimaler Queranströmung von schädigenden Krafteinleitungen geschützt sind. Dies führt zu einer optimalen Abreinigung des Fluids und einem langandauernden, energetisch günstigen Betrieb der Filtervorrichtung nebst Filterelement.

Im Folgenden werden noch geänderte Ausführungsformen der erfindungsgemäßen Filtervorrichtung anhand von Zeichnungen nach den einzelnen Figuren näher erläutert. Dabei werden dieselben Bauteile mit denselben Bezugszeichen wie vorstehend benannt und insoweit gelten auch die für diese Baukomponenten bisher getroffenen Erläuterungen auch für die geänderten Ausführungsformen.

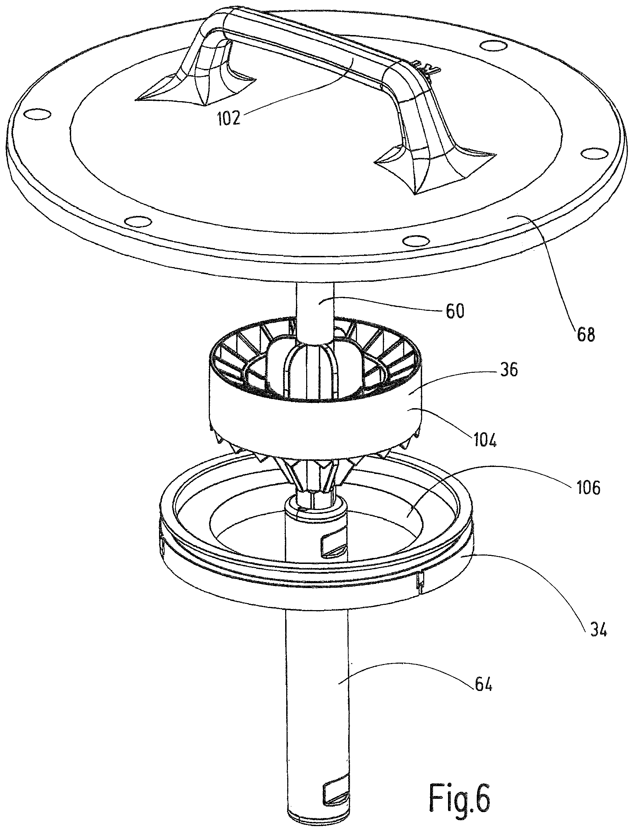

Fig. 6 zeigt das mittels einer Handhabe 102 von der Oberseite des Vorratstanks 30 abnehmbare obere Deckelteil 68, das über die Haltestange 66 mit der Magneteinrichtung 64 verbunden ist. In diese Verbindung ist zwischen Haltestange 66 und Magneteinrichtung 64 die Fluidführungseinrichtung 36 als Ganzes geschaltet, die außenumfangsseitig einen zylindrischen Umfassungsmantel 104 aufweist. Ferner ist in Fig. 6 die obere Endkappe 34 dargestellt als Bestandteil des Filterelementes; jedoch der einfacheren Darstellung wegen ohne das zugehörige Elementmaterial 10. Die Endkappe weist an zentraler, mittiger Stelle eine zylindrische Durchgriffsöffnung 106 auf, in die die Fluidführungseinrichtung 36 mit ihrem Umfassungsmantel 104 passgenau zentrisch einsetzbar ist.

Die Darstellung nach der Fig. 6 zeigt die Situation, wenn über das obere Deckelteil 68 nach Entfernen der korrespondierenden Schraubverbindungen, aus dem Vorratstank 30 sowohl die Fluidführungseinrichtung 36 als auch die Magneteinrichtung 64 entfernt wird bei verbleibendem Filterelement in seiner Aufnahmeposition im Abströmrohr 26. In umgekehrter Einsatzrichtung kann über das obere Deckelteil 68 wiederum die Fluidführungseinrichtung 36 über ihren Umfassungsmantel 104 passgenau in die Durchgriffsöffnung 106 der Endkappe 36 eingesetzt und dort positioniert werden. Insoweit ist entgegen den vorangehenden Ausführungsbeispielen die Fluidführungseinrichtung 36 nicht einstückiger Bestandteil der oberen Endkappe 36, sondern vielmehr eine Anbaukomponente des oberen Deckelteils 68 und mit diesem fest verbunden.

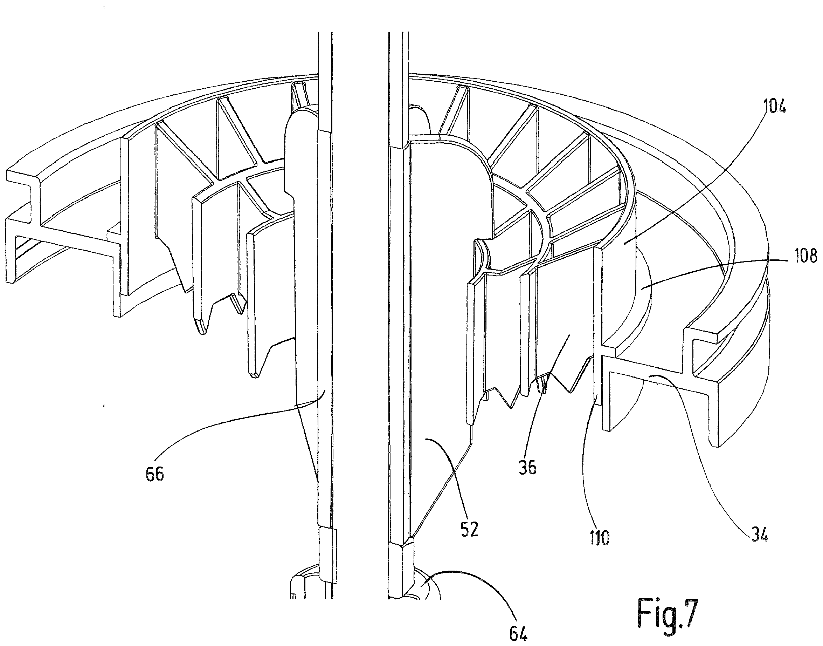

Bei der Ausführungsform nach der Fig. 7 ist die Fluidführungseinrichtung 36 mit ihrem kranzartigen Aufbau als Aufsetzteil konzipiert, wobei die außenumfangsseitig zylindrisch ausgebildete Fluidführungseinrichtung 36 über einen umlaufenden Aufsetzrand 108, der nach außen radial vorspringt auf die Oberseite von Teilen der oberen Endkappe 34 aufsetzbar ist und insoweit ist der Rand 108 lose auf die horizontal sich erstreckende Oberseite der Endkappe 34 aufgelegt. Ferner liegt der äußere Umfassungsmantel 104 der Fluidführungseinrichtung 56 mit einem senkrecht nach unten sich erstreckenden Wandabschnitt 110 an der radial verlaufenden Innenumfangswand für das Elementmaterial 10 an der Endkappe 34 an.

Dabei braucht die innere Fluidführung 52 nicht Bestandteil der Fluidführungseinrichtung 36 zu sein, sondern kann vielmehr gemäß der Darstellung nach der Fig. 7 unter Einhalten eines radialen Abstandes, in die mittige Durchgangsöffnung der Fluidführungseinrichtung 36 eingebracht sein. Hierfür dient wiederum die Festlegung über den Haltestab 66 des Deckelteils 68.

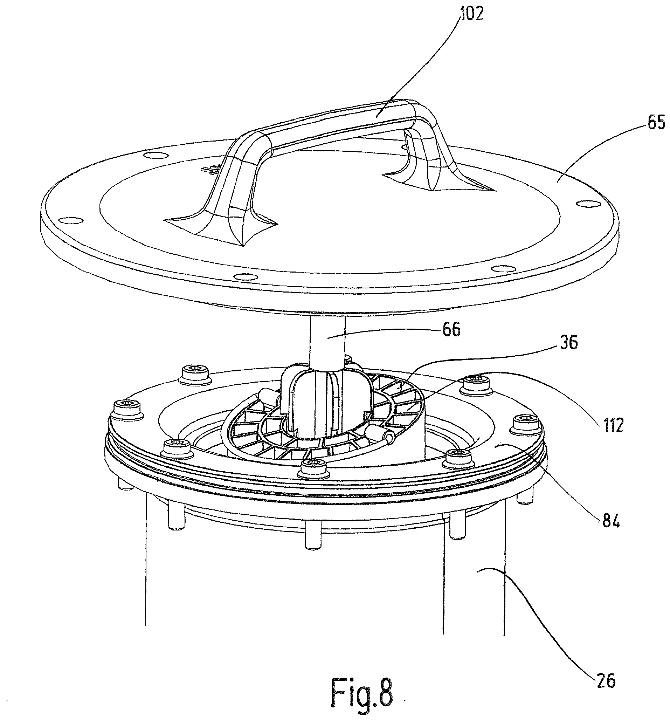

Bei der Ausführungsform nach der Fig. 8 in Entsprechung zu dem konstruktiven Aufbau der Lösung nach der Fig. 1 weist nunmehr die Fluidführungseinrichtung 36 auf ihrer Oberseite gegenüber der Horizontalen, eine schräg geneigte Eintrittsfläche 112 auf, wobei die Neigung derart gewählt ist, dass an der Stelle des Eintritts des Unfiltratstroms der Abstand zu der schräg geneigten Eintrittsfläche 112 am größten ist und davon abgewandt sich der dahingehende Abstand gemäß der Darstellung nach der Fig. 8 verringert. Insbesondere bei direkter seitlicher Anströmung mit dem Unfiltratstrom lässt sich dergestalt eine verbesserte Strömungsführung in Richtung der Unfiltratseite 14 des Filterelementes erreichen.

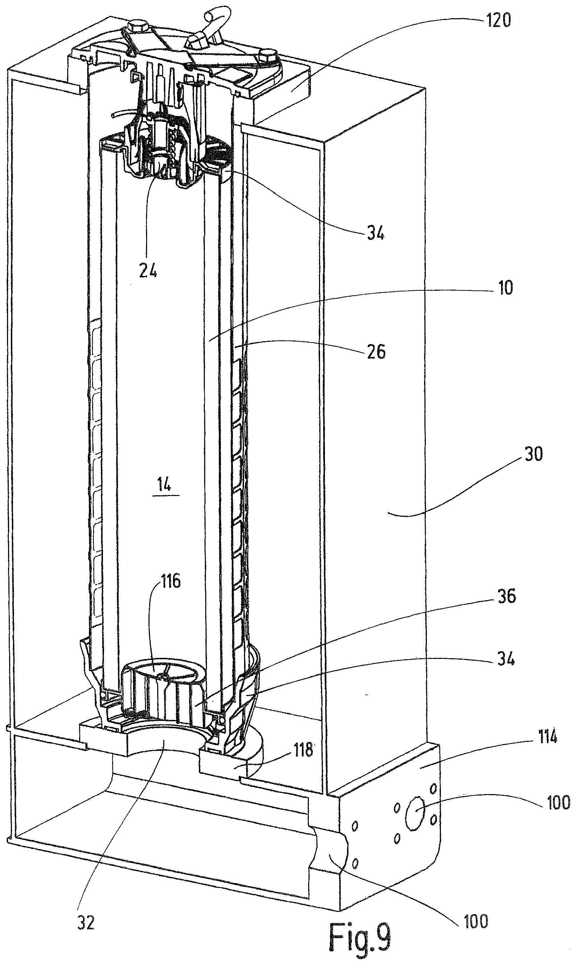

Die Ausführungsform nach der Fig. 9 ist insoweit zu der Lösung nach der Fig. 1 unterschiedlich als hier die Zuströmseite 32 sich auf der Unterseite des Filterelementes befindet. Dabei schließt sich an den Vorratstank 30 auf seiner Unterseite eine kastenförmige Zuströmkammer 114 an, mit Fluideinlässen als Eingang 100. Die Fluidführungseinrichtung 36 ist nunmehr integraler Bestandteil der unteren Endkappe 34 und kann zusammen mit dem Filterelement und seinem Elementmaterial 10 aus dem im Vorratstank 30 verbleibenden Abströmrohr 26 entnommen werden. Um einen ungewollten Rückstrom von der Unfiltratseite 14 des Filterelementes in Richtung der Zuströmseite 32 zu vermeiden, ist die Fluidführungseinrichtung 36 auf ihrer Oberseite mit einem Tellerventil 116 versehen, das in üblicher Weise in Richtung des Unfiltratraumes 14 öffnet und in der entgegengesetzten Richtung zur Zuströmseite 32 hin schließt. Die Zuströmkammer 114 weist im Bereich der Zuströmseite 32 eine ringförmige Aufnahme 118 auf, auf der in konzentrischer Anordnung das Filterelement mit dem Abströmrohr 26 aufgesetzt ist, das sich am oberen Ende an einer oberen Aufnahme 120 im Vorratstank 30 abstützt, wobei die dahingehende obere Aufnahme 120 insoweit randseitig die obere horizontale Tankwand des Vorratstanks 30 übergreift. In diesem oberen Bereich ist nunmehr die federbelastete Bypasseinrichtung 24 als Bestandteil der oberen Endkappe 34 angeordnet.

Auch mit dieser Vorrichtungslösung erfolgt eine Durchströmung des Filterelementes mit Unfiltrat von der Innenseite zur Außenseite, so dass mittels des Elementmaterials 10 abgereinigtes Fluid auf die Innen- oder Aufnahmeseite des Fluid-Vorratstanks 30 gelangt, von wo aus das Fluid für weitere Verwendungszwecke, beispielsweise zur Versorgung eines hydraulischen Druckversorgungskreislaufes (nicht dargestellt) entnommen werden kann.

## Patentansprüche

1. Filtervorrichtung mit einem in einem Vorratstank (30) tauschbar aufgenommenen Filterelement, das ein Elementmaterial (10) aufweist, das eine Filtratseite (12) von einer Unfiltratseite (14) trennt, wobei das Filterelement zumindest an einer Zuströmseite (32) für einen Unfiltratstrom mit einer Endkappe (34) versehen ist und mit einer Fluidführungseinrichtung (36), die über einzelne Stege (38) voneinander getrennte Fluiddurchlässe (40) aufweist, **dadurch gekennzeichnet, dass** die Fluidführungseinrichtung (36) an zentraler Stelle innerhalb der Endkappe (34) angeordnet im Betrieb eine Fluidverbindung zwischen der Zuströmseite (32) und der Unfiltratseite (14) herstellt.

2. Filtervorrichtung nach Anspruch 1, **dadurch gekennzeichnet, dass** die Fluidführungseinrichtung (36) strahlenartig von ihrer Mitte ausgehend in der Art mindestens eines Kranzes (42, 44) die einzelnen Stege (38) aufweist, die endseitig derart in Ringwandungen (46, 48, 50) übergehen, dass schachtartige Fluiddurchlässe (40) gebildet sind.

3. Filtervorrichtung nach Anspruch 1 oder 2, **dadurch gekennzeichnet, dass** mindestens zwei Kränze (42, 44) in Reihe hintereinander angeordnet sind, die eine unterschiedliche Anzahl von Stegen (36) und von unterschiedlich großen Fluiddurchlässen (40) aufweisen.

4. Filtervorrichtung nach einem der vorstehenden Ansprüche, **dadurch gekennzeichnet, dass** die Summe der freien Querschnittsflächen aller Fluiddurchlässe (40) des äußeren Kranzes (42) gleich oder im Wesentlichen gleich sind mit den freien Querschnittsflächen aller Fluiddurchlässe (40) des jeweils in der Reihe nachfolgenden inneren Kranzes (44).

5. Filtervorrichtung nach einem der vorstehenden Ansprüche, **dadurch gekennzeichnet, dass** der jeweilige Kranz (42, 44) koaxial zur Längsachse des Filterelementes angeordnet ist.

6. Filtervorrichtung nach einem der vorstehenden Ansprüche, **dadurch gekennzeichnet, dass** die Fluidführungseinrichtung (36) koaxial zur Längsachse des Filterelementes angeordnet eine
- zusätzliche Fluidführung (52) und/oder
- Halteeinrichtung (62) für eine Magneteinrichtung (64), wie einen Permanentmagneten, aufweist, die zumindest teilweise auf der Unfiltratseite (14) des Elementmaterials (10) geführt ist.

7. Filtervorrichtung nach einem der vorstehenden Ansprüche, **dadurch gekennzeichnet, dass** die die Fluiddurchlässe (40) begrenzenden Stege (38) und bevorzugt auch die die Stege (38) radial begrenzenden Ringwandungen (46, 48, 50) an ihrer der Zuströmseite (32) abgekehrten Seite unter Bildung einer Krone (93) mit vorspringenden Zacken (94) versehen sind.

8. Filtervorrichtung nach einem der vorstehenden Ansprüche, **dadurch gekennzeichnet, dass** die Endkappe (34) auf der Zuströmseite (32) eine Abdichteinrichtung (74) aufweist, die mit einem ringförmigen Dichtungsträger (76) versehen ist und die mit einer wirksamen Dichtfläche über eine Aufnahme (80) in der Endkappe (34) für das Elementmaterial (10) vorsteht.

9. Filtervorrichtung nach einem der vorstehenden Ansprüche, **dadurch gekennzeichnet, dass** die Stege (36) und die zugehörigen Fluiddurchlässe (40) auf gegenüberliegenden Seiten der Einfassung für das Elementmaterial (10) der Endkappe (34) axial vorstehen.

10. Filtervorrichtung nach einem der vorstehenden Ansprüche, **dadurch gekennzeichnet, dass** das Filterelement tauschbar in einem Abströmrohr (26) innerhalb des Vorratstanks (30) aufgenommen ist, das Bestandteil einer Festlegeeinrichtung mit zwei zueinander beabstandeten Deckelteilen (68, 86) ist, die zwischen sich eine Prallplatte (96) mit Durchgängen (98) aufspannen, die in Fluidverbindung mit der Zuströmseite (32) des Filterelementes stehen.

11. Filtervorrichtung nach einem der vorstehenden Ansprüche, **dadurch gekennzeichnet, dass** die Fluidführungseinrichtung (36) integraler Bestandteil der Endkappe (34) ist, die am oberen und/oder unteren Ende am Filterelement als der tauschbaren Baueinheit im Vorratstank (30) angeordnet ist.

12. Filtervorrichtung nach einem der vorstehenden Ansprüche, **dadurch gekennzeichnet, dass** die Fluidführungseinrichtung (36) mit dem im Betrieb zuoberst liegenden Deckelteil (68) zusammen aus dem Vorratstank (30) entfernbar und umgekehrt in die Endkappe (34) des im Vorratstank (30) verbleibenden Filterelements an zentraler Stelle einsetzbar ist.

13. Filtervorrichtung nach einem der vorstehenden Ansprüche, **dadurch gekennzeichnet, dass** die Fluidführungseinrichtung (36) als Einzelbauteil lose auf die Elementkappe (34) aufsetzbar ist.

14. Filtervorrichtung nach einem der vorstehenden Ansprüche, **dadurch gekennzeichnet, dass** zumindest Teile der Fluidführungseinrichtung (36) in der Betriebsstellung gegenüber der Horizontalen eine Neigung aufweisen.

15. Filterelement, insbesondere vorgesehen für den Einsatz in einer Filtervorrichtung nach einem der vorstehenden Ansprüche, mit einem Elementmaterial (10), das eine Filtratseite (12) von einer Unfiltratseite trennt, und das zumindest an einer Zuströmseite (32) für einen Unfiltratstrom mit einer Endkappe (34) versehen ist, die eine Fluidführungseinrichtung aufweist, die über einzelne Stege (38) voneinander getrennte Fluiddurchlässe (40) aufweist, **dadurch gekennzeichnet, dass** die Fluidführungseinrichtung (36) an zentraler Stelle der Endkappe angeordnet eine Fluidverbindung zwischen der Zuströmseite (32) und der Unfiltratseite (14) herstellt.
